# EUROPEAN PATENT APPLICATION

(11) **EP 3 767 085 A1**
(43) Date of publication of application: **20.01.2021**
(21) Application number: 20189097.7
(22) Date of filing: 27.07.2017
(51) Int. Cl.: F01N 3/20, B01F 3/04, B05B 1/34, B01D 53/00, F02M 61/18, B05B 1/14, B05B 1/30

(54) **SCR DOSER SPRAY ATOMIZATION**

(30) Priority: 02.08.2016 GB 201613307
(62) Divisional of application: 17183648.9
(71) Applicant: Delphi Technologies IP Limited, Saint Michael (BB)
(72) Inventor: FERRARO, Valentina, Greenwich, SE1 09PN (GB); PANTENY, Simon, R., Rochester, KENT ME1 2AX (GB)
(74) Representative: Delphi France SAS

(57) **Abstract**

A Selective catalytic reduction (SCR) doser (10) having a body (12), a valve seat (18) being arranged on the inner face (24) of the transverse wall (20) of the body, said valve seat (18) controlling the injection through a single first hole or through a first plurality of spray holes (22) extending through said transverse wall from the inner face (24) to an outer face (26); said spray holes (22) opening in the outer face (26) of the transverse wall within a first circle (C1);
the SCR doser (10) further comprising a diffuser plate (32) having an first face (34) annular and peripheral surrounding a recess arranged in the thickness of the plate (32) and, an opposed second face (36), the plate (32) being arranged on the body so that a cavity (C) is defined by the recess between the outer face (26) of the transverse wall and the annular first face (34) of the diffuser plate, the first plurality of restricted spray holes (22) opening in said cavity (C) and,
the diffuser plate (32) being provided with a second plurality of spray holes (38) extending between the bottom face of the cavity (C) and said opposed second face (36), the spray holes (38) of the second plurality of spray holes open in the second face (36) of the diffuser plate within a second circle (C2).

## Description

### TECHNICAL FIELD

The present invention relates to a selective catalytic reduction doser and more particularly to an arrangement enabling further spray and atomization of the expelled fluid reagent.

### BACKGROUND OF THE INVENTION

A selective catalytic reduction (SCR) doser consists of a valve member that controls the flow of a chemical, or reagent such as urea aqueous fluid (better known under the commercial name of AdBlue) that will reduce the nitrous oxides exiting the tailpipe. While the valve controls the flow of this chemical the efficiency is dependent upon the distribution of the chemical generated within the exhaust in order to improve mixing and chemical interaction.

It is becoming important that not only the amount of liquid injected by a SCR doser is controlled, but also the level of atomisation of the spray. A spray with a greater atomisation improves the efficiency of the SCR system, thus reducing the amount of urea to be carried.

SCR reagent is normally injected at a pressure of about 6 bars through spray holes that are about 100µm diameter or smaller. It is desired, for purposes of non-corrosion of the exhaust pipe that the spray of urea aqueous reagent does not impact the internal wall of the pipeline therefore, as a function of the vehicle design, the doser may be arranged in line or perpendicular or at an angle with the pipeline.

The orifices through which fluid urea is injected above atmospheric pressure defines the spray and, depending on the positioning of the spray orifices, in relation to the valve controlling flow, the degree of atomization can be adjusted but, depending on the number of spray orifices current designs can suffer from insufficient atomization and inconsistent spray behavior from one spray hole to another. DE102012216638, DE102015216812 and DE102007043532 are prior art documents relevant to the present invention.

Fuel injectors, although having some design similarities with SCR dosers, are not relevant prior art to the present invention since there are too many differences between fuel injectors and SCR reagent dosers. For instance the materials and surface treatments are different because of corrosion linked to aqueous urea, gasoline or diesel. Also, in use the pressure is below 10 bars for an SCR doser while it is largely over 100 bars for a gasoline injector, the SCR spray enters the stream of continuous exhaust gases while the fuel spray enters a closed combustion chamber. The size of the spray holes, their orientations and their numbers are different due to these specificities.

### SUMMARY OF THE INVENTION

Accordingly, it is an object of the present invention to resolve the above mentioned problems in providing a selective catalytic reduction (SCR) doser adapted to spray, in use, an aqueous urea reagent in a tailpipe of an internal combustion engine The doser has a monobloc body comprising a lateral tubular wall and a transverse wall, said walls enclosing an inner volume within which is arranged a valve member adapted to move along a main axis in order to open or to close a valve seat arranged on a tapered inner face of the transverse wall, said valve seat controlling the injection of the reagent through at least one first hole usually central and axial, extending through said transverse wall from the inner face to an outer face, the at least one first hole opening in the outer face of the transverse wall within a first circle.

The SCR doser further comprises a diffuser plate having a first face fixed to the outer face of the transverse wall and an opposed second face. The first face is annular and and it surrounds a recess arranged in the thickness of the plate, said recess defining a cavity wherein open the at least one first spray holes.

The diffuser plate is provided with a second plurality of spray holes extending between the bottom face of the cavity and said opposed second face, the spray holes of the second plurality of spray holes open in the second face of the diffuser plate within a second circle.

In an alternative, the SCR doser is provided with a first plurality of spray holes extending through the transverse wall of the body and opening in the outer face of the transverse wall on said first circle.

Also, said first circle which may be axially centred.

All the spray holes of the second plurality of spray holes may randomly open in the second face of the diffuser plate in a non-circular pattern or, alternatively on said second circle. The second circle may be axially centred.

The first circle may be smaller, or alternatively, larger than said second circle.

Also, the first plurality of spray holes may extend through the transverse wall parallel or non-parallel to the main axis.

The invention further extends to a SCR system comprising a reagent tank, a pump, connecting pipes and a doser as described before, said system being adapted to purge the doser from the reagent remaining in the send it back to the tank. Indeed the aqueous reagent increasing volume when it freezes, in order to prevent any damages when the engine is stopped under cold weather, the remaining reagent must be sucked back into the tank.

### BRIEF DESCRIPTION OF THE DRAWINGS

The present invention is now described by way of example with reference to the accompanying drawings in which:
Figure 1 is an axial section of a first embodiment of a SCR doser provided with a diffuser plate as per the invention.
Figures 2 and 3 are top views of two alternatives of the transverse wall and diffuser plate of figure 1.
Figure 4 is an axial section of a second embodiment of a SCR doser provided with another diffuser plate as per the invention.
Figure 5 is a top view of the transverse wall and diffuser plate of figure 4.

### DESCRIPTION OF THE PREFERRED EMBODIMENTS

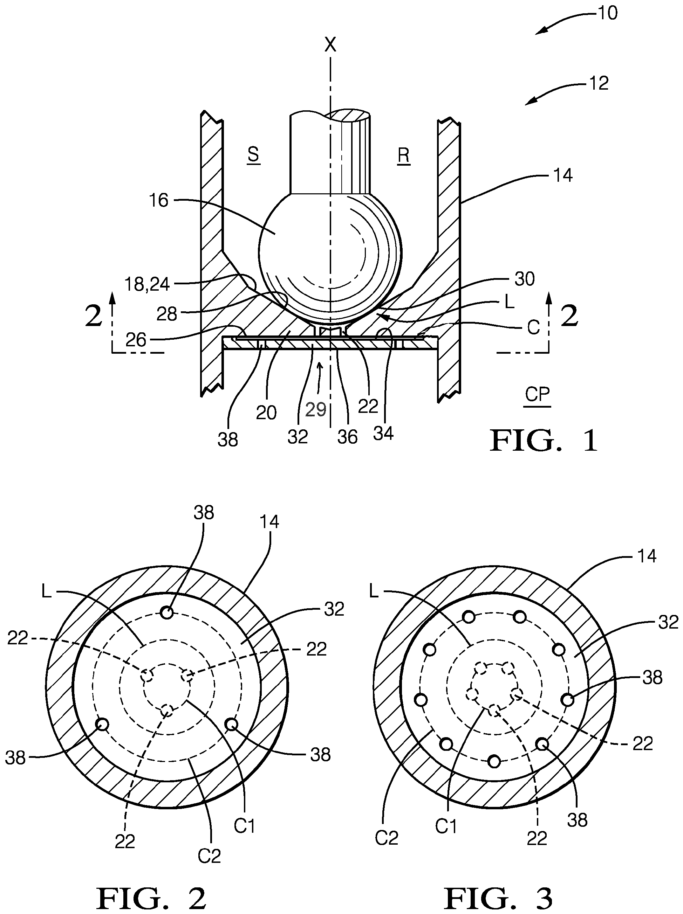

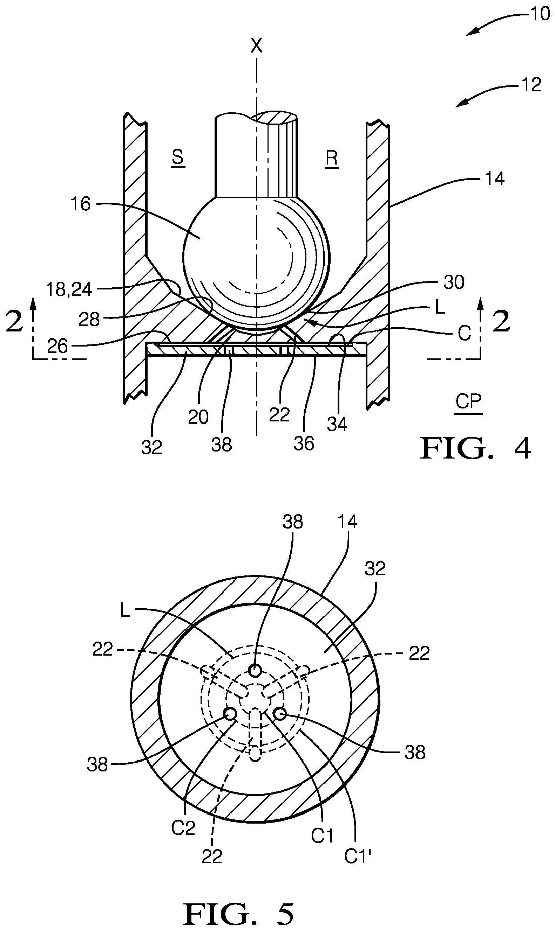

In reference to figures 1 and 4 are sketched partial sections of a first embodiment and a second embodiment of a selective catalytic reduction, hereafter SCR, doser 10 adapted to be arranged on a tailpipe, not represented. The doser 10 has a monobloc body 12 with a peripheral wall 14 comprising a tubular lateral wall, extending along a main longitudinal axis X, and a transverse wall substantially orthogonal to the main axis X, said walls surrounding an inner space S, in which is slidably arranged a valve member 16 adapted to move along the main axis X between a closed position CP and an open position OP of a valve seat 18. There is a manufacturing advantage to have a monobloc body, indeed, a one-piece blank eases to machine the correct dimensions and manufacturing tolerances required to be met between different part of the doser. For instance the guiding means of the valve member must be aligned to the valve seat to enable to close spray holes. A body having several components fixed together by welding or any other means, does not provided that manufacturing easiness.

The transverse wall has an inner face 24 oriented inside said inner space S and an opposed outer face 26 oriented toward the tailpipe. As visible on the figure, the valve seat 18 comprises a tapered face 28 provided on the inner face 24, the tapered type most usually used is a conical inner face 28 which defines a central thinner portion 29 of the transverse wall. A complementary movable seat face 30 of the valve member 16 which, in the exemplary embodiment presented is a spherical ball but another shape such as a male conical face, could also be utilized to cooperate with the tapered face 28.

Furthermore, the transverse wall 20 is provided with a single hole or a plurality of spray holes 22 extending through said transverse wall 20 and which openings are distributed on an axially centered first circle C1.

In closed position CP, the ball face 30 contacts the tapered face 28 along a closed circular sealing line L preventing reagent R pressurized in the inner space S to be sprayed via the first spray holes 22 and, in open position OP, the ball face 30 lifts away from the tapered face 28 opening a passage between the inner space S and the first spray holes 22 and enabling reagent to be sprayed.

The doser 10 further comprises a diffuser plate 32 fixed to the body 12, said diffuser plate 32 having a first face 34 arranged oriented toward the outer face 26 of the transverse wall and, an opposed second face 36 oriented toward the tailpipe. Between the outer face 26 of the transverse wall and the first face 34 of the diffuser plate is defined a thin cavity C in which open the first spray holes 22. The diffuser plate is fixed to the body via a fixing clip or via welding or other means, the welding not being preferred since the heat generated during the process may distort the body.

On the figures, the cavity C is defined by a recess arranged, dug or formed by other means, in the first face 34 of the plate, said recess defining a bottom face substantially parallel to the second face, the recess being surrounded by an annular peripheral border that is in surface abutment against the outer face 26 of the transverse wall.

Also, the diffuser plate 32 is provided with a second set of spray holes 38 creating a fluid communication through said plate 32, between the bottom face of the recess and second face 36. In the exemplary embodiment of the figure, the spray holes 38 axially X extend through the plate and are distributed on a second circle C2 axially centered. In a non-represented alternative, said spray holes 38 extend in making an angle with the main axis.

A single hole in the transverse wall of the body may have a diameter of few tenth of a millimeter. In case of a plurality of spray holes through the transverse wall said holes would typically be smaller with a diameter of about 60 to 100 micrometer. This is also the typical dimension of the holes of the second set extending through the diffuser plate.

In the first embodiment presented on figure 1, the first spray holes 22 extends X through the central and thinner portion 29 of the transverse wall so that their openings on the outer face 26 are also distributed on said first circle C1. Furthermore, the second circle C2 is has a larger diameter than the first circle C1 so that, in open position OP of the valve member 16, pressurized reagent exits the inner space S by passing through the first spray holes 22 and it fills the cavity C, prior to flow outwardly toward the second spray holes 38 that finally spray the reagent in the tailpipe.

In a first alternative shown on figure 2, the doser 10 is provided with three firsts holes 22 and three second holes 38 while, in a second alternative presented on figure 3, the doser 10 has five firsts holes 22 and nine second holes 38. These alternatives are simple examples and any other quantity of holes is of course possible.

In the second embodiment presented on figure 4, the first spray holes 22 extend angularly relative to the main axis X so that their openings on the outer face 26 are distributed on an outer first circle C1' much larger than the previous small circle C1 and, the second circle C2 is of a smaller diameter than said outer first circle C1' so that, in open position OP of the valve member 16, pressurized reagent exits the inner space S by passing through the first spray holes and it fills the cavity C wherein the reagent flows inwardly, and goes through the second spray holes 38 which finally spray the reagent in the tailpipe.

As written before, the number of holes, the orientation, axially or angularly of said holes, depends on the engine application and, the arrangement of the doser relative to the exhaust pipe, trying to have a reagent spray that does not impact the inner wall of the pipe while said spray largely diffuses into the complete flow stream of exhaust gases.

In an alternative shown on figure 5, the doser 10 is provided with three firsts orifices 22 and three second holes 38 while any other quantity of holes is of course possible.

Alternatively the second holes 38 may be distributed on a second circle C2 that is greater than the first circle C1'. Also, in a non-represented alternative, the spray holes 38 may be randomly distributed and exit the diffuser plate 32 in a non-circular pattern.

### LIST OF REFERENCES

- X: main axis
- S: inner space
- CP: closed position
- OP: open position
- R: reagent
- L: sealing line
- C1: first circle
- C2: second circle
- C1': outer first circle
- C: cavity

- 10: SCR doser
- 12: body
- 14: peripheral wall
- 16: valve member
- 18: valve seat
- 20: transverse wall
- 22: orifices
- 24: inner face of the transverse wall
- 26: outer face of the transverse wall
- 28: tapered face
- 29: thinner part of the transverse wall
- 30: movable seat face
- 32: diffuser plate
- 34: first face of the diffuser plate
- 36: second face of the diffuser plate
- 38: spray holes

## Claims

1. A Selective catalytic reduction (SCR) doser (10) adapted to spray, in use, an aqueous urea reagent (R) in a tailpipe of an internal combustion engine, said doser (10) having a monobloc body (12) comprising a lateral tubular wall and a transverse wall, said walls enclosing an inner volume (S) within which is arranged a valve member (16) adapted to move along a main axis (X) in order to open or to close a valve seat (18) arranged on a tapered inner face (24) of the transverse wall (20) of the body, said valve seat (18) controlling the injection of the reagent through at least one first hole (22) extending through said transverse wall from the inner face (24) to an outer face (26); said at least one first hole (22) opening in the outer face (26) of the transverse wall within a first circle (C1);
the SCR doser (10) further comprises a diffuser plate (32) having a first face (34) fixed to the outer face (26) of the transverse wall and an opposed second face (36), said first face (34) being annular and surrounding a recess arranged in the thickness of the plate (32), said recess defining a cavity (C) wherein open the at least one first spray holes (22) and,
the diffuser plate (32) is provided with a second plurality of spray holes (38) extending between said bottom face and said opposed second face (36), the spray holes (38) of the second plurality of spray holes opening in the second face (36) of the diffuser plate within a second circle (C2).

2. SCR doser (10) as claimed in the preceding claim provided with a first plurality of spray holes (22) extending through the transverse wall of the body.

3. SCR doser (10) as claimed in claim 2 wherein all the spray holes (22) of said first plurality open in the outer face of the transverse wall (26) on said first circle (C1).

4. SCR doser (10) as claimed in any one of the preceding claims wherein said first circle (C1) is axially centred.

5. SCR doser (10) as claimed in any of the preceding claims wherein all the spray holes (38) of the second plurality of spray holes randomly open in the second face (36) of the diffuser plate in a non-circular pattern.

6. SCR doser (10) as claimed in any of the preceding claims wherein all the spray holes (38) open in the second face of the plate on said second circle (C2).

7. SCR doser (10) as claimed in any of the preceding claims wherein said second circle (C2) is axially centred.

8. SCR doser (10) as claimed in any of the preceding claims wherein said first circle (C1) is smaller than said second circle (C2).

9. SCR doser (10) as claimed in any of the claims 2 to 7 wherein said first circle (C1) is larger than said second circle (C2).

10. SCR doser (10) as claimed in any of the preceding claims wherein the at least one or first plurality of spray holes (22) extend parallel to the main axis (X) through the transverse wall.

11. SCR doser (10) as claimed in any of the claims 1 to 9 wherein the at least one or first plurality of spray holes (22) extend non-parallel to the main axis (X) through the transverse wall.

12. SCR system comprising a reagent tank, a pump, connecting pipes and a doser as claimed in any of the preceding claims, said system being adapted to purge the doser from the reagent remaining in the send it back to the tank.
